# FASCICULE DE BREVET EUROPEEN

(11) **EP 2 559 169 B1**
(45) Date de publication et mention de la délivrance du brevet: **07.05.2014**
(21) Numéro de dépôt: 11712529.4
(22) Date de dépôt: 30.03.2011
(51) Int. Cl.: H04B 7/185

(54) **METHODE DE PROPAGATION DE MESSAGES DANS UN RESEAU DE COMMUNICATION PAR SATELLITES**
VERFAHREN ZUR NACHRICHTENVERBREITUNG IN EINEM SATELLITEN KOMMUNIKATIONSNETZ
METHOD OF MESSAGE PROPAGATION IN A SATELLITE COMMUNICATION NETWORK

(30) Priorité: 16.04.2010 FR 1001635
(43) Date de publication de la demande: 20.02.2013
(73) Titulaire: Thales, 92200 Neuilly-sur-Seine (FR)
(72) Inventeur: CALMETTES, Thibaud, F-31400 Toulouse (FR); MONNERAT, Michel, F-31240 Saint Jean (FR); KAROUBY, Philippe, F-31100 Toulouse (FR)
(74) Mandataire: Lopez, Frédérique
(86) Numéro de dépôt international: PCT/EP2011/054949
(87) Numéro de publication internationale: WO 2011/128206

(56) Documents cités:
- EP-A1- 2 086 279
- EP-A2- 0 837 567
- WO-A1-99/46877
- WO-A1-2007/059560

## Description

La présente invention concerne une méthode visant à optimiser la propagation d'informations dans un réseau de communication à destination d'un réseau satellitaire.

Plus précisément, l'invention est fondée sur le maintien à jour, de façon dynamique, de la cartographie des utilisateurs du réseau de communication, de manière à déterminer un chemin optimal à l'intérieur dudit réseau de communication, depuis un émetteur jusqu'à un destinataire, en passant par le moins d'intermédiaires possible.

La problématique générale liée à la présente invention relève de la collecte de données par satellite. L'objectif est de propager des informations vers un réseau satellitaire, qu'il s'agisse de données périodiques de faible volume ou de données instantanées de volume important. Ces données doivent pouvoir être transmises en temps réel par des émetteurs pouvant être des stations sol ou des aéronefs.

De manière plus particulière, la présente invention vise la surveillance du trafic aéronautique global. Dans ce contexte, les informations à propager concerne typiquement des données de monitoring périodiques et le contenu des boîtes noires en cas d'incident.

Actuellement, il est généralement indispensable, pour transmettre des données du sol vers un réseau satellitaire, que l'utilisateur émetteur soit en vue d'au moins un satellite du réseau satellitaire, en ce sens qu'au moins un satellite du réseau satellitaire doit être en mesure de recevoir un message contenant lesdites données, émis par l'utilisateur émetteur. Pour permettre une surveillance globale, il est par conséquent actuellement requis que le réseau satellitaire utilisé présente une couverture globale. Les solutions actuelles utilisent soit des satellites géostationnaires, permettant une couverture globale en dehors des pôles, soit des constellations de satellites en orbite basse composées d'un grand nombre de satellites, typiquement environ 80 satellites.

Dans le contexte prioritairement visé, à savoir celui de la surveillance aéronautique globale, il serait très préjudiciable de ne pas couvrir les pôles ; la solution comprenant des satellites géostationnaires est donc d'emblée exclue.

L'inconvénient qui découle de l'utilisation, voire du déploiement, d'une constellation de satellites en orbite basse comprenant plusieurs dizaines de satellites réside dans la complexité et le coût très élevés inhérents à de tels systèmes.

Voir WO-A-2007/059560 (Jamalipour et al.).

Un but de l'invention est notamment de pallier les inconvénients précités. Le problème technique principal résolu par la présente invention concerne donc la propagation de messages du sol vers un réseau satellitaire d'une manière simple et optimisée en termes de coût.

Ainsi, l'invention a pour objet une méthode de propagation de messages dans un réseau de communication à destination d'un réseau satellitaire, le réseau de communication étant constitué d'un ensemble d'utilisateurs et le réseau satellitaire comprenant au moins un satellite, l'ensemble d'utilisateurs comprenant un émetteur et un destinataire, ledit destinataire étant destiné à émettre vers le réseau satellitaire un message initial provenant de l'émetteur, au moins un satellite du réseau satellitaire étant visible dudit destinataire, c'est-à-dire apte à recevoir un message émis par ledit destinataire, chaque utilisateur étant apte à émettre un message avec une portée telle qu'un sous-ensemble d'utilisateurs visibles est apte à recevoir ledit message, et ledit message pouvant être transmis d'utilisateur en utilisateur, de sorte que, l'émetteur émettant le message initial, ledit message initial peut être transmis au destinataire en passant par un certain nombre d'utilisateurs intermédiaires. Ladite méthode est caractérisée en ce que chaque utilisateur détermine un nombre d'intermédiaires nécessaires pour atteindre le destinataire et émet périodiquement un message comprenant ledit nombre d'intermédiaires nécessaires pour atteindre le destinataire, et en ce que ledit message initial est émis par l'émetteur à destination de l'utilisateur visible présentant le nombre d'intermédiaires nécessaires le plus bas possible, appelé intermédiaire optimal, 1, ledit intermédiaire optimal devenant à son tour émetteur et émettant le message initial, l'opération se répétant jusqu'à atteindre le destinataire.

Les utilisateurs sont en général des aéronefs et / ou des stations sol.

Selon un mode de mise en oeuvre de la méthode selon l'invention, une partie au moins des utilisateurs présente une position fixe connue de l'émetteur.

Avantageusement, le message émis périodiquement par l'ensemble des utilisateurs peut comprendre la position de l'utilisateur concerné.

Avantageusement, le message émis périodiquement par l'ensemble des utilisateurs peut en outre comprendre la vitesse de l'utilisateur concerné.

Avantageusement, le message émis périodiquement par l'ensemble des utilisateurs peut en outre comprendre le cap de l'utilisateur concerné.

Avantageusement, le message émis périodiquement par l'ensemble des utilisateurs comprend en outre une information de durée de validité pendant laquelle le nombre d'intermédiaires nécessaires pour atteindre le destinataire contenu ledit message pour l'utilisateur concerné est valable.

Avantageusement, le message émis périodiquement par l'ensemble des utilisateurs comprend en outre un nombre futur d'intermédiaires nécessaires pour atteindre le destinataire après que ladite durée de validité s'est écoulée, ledit nombre futur d'intermédiaires nécessaires pour atteindre le destinataire présentant sa propre durée de validité.

Avantageusement, le message émis périodiquement par l'ensemble des utilisateurs comprend en outre une succession de nombres futurs d'intermédiaires nécessaires pour atteindre le destinataire après que ladite durée de validité s'est écoulée, chaque nombre futur d'intermédiaires nécessaires pour atteindre le destinataire présentant sa propre durée de validité.

Avantageusement, l'émetteur détermine en temps réel la position estimée des utilisateurs du réseau de communication et détermine de manière dynamique le chemin le plus court permettant de faire parvenir le message initial au destinataire en passant par le nombre d'intermédiaires le plus bas possible.

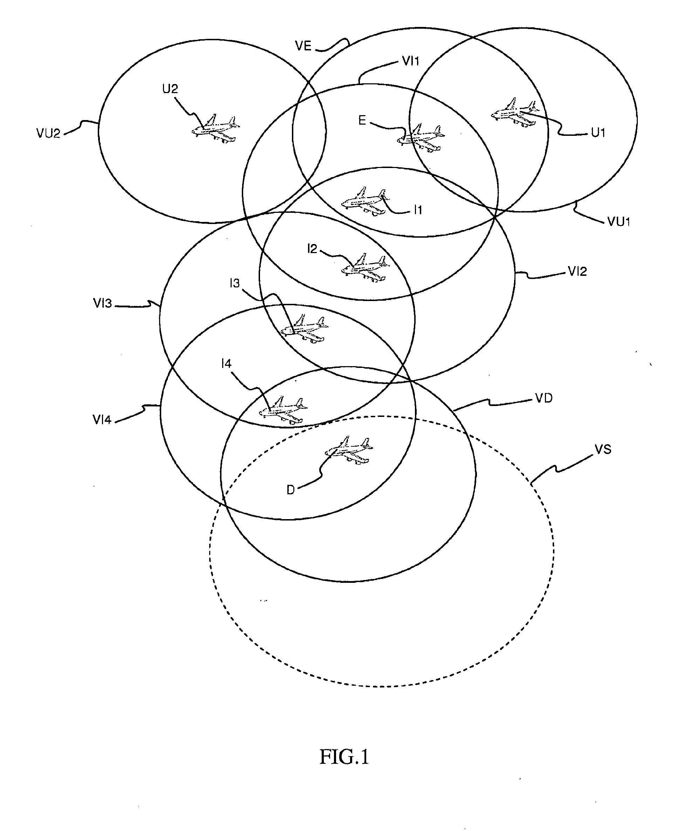

D'autres caractéristiques et avantages de l'invention apparaîtront à l'aide de la description qui suit faite en regard de la figure 1 annexée qui représente le schéma de principe de l'invention.

La figure 1 présente un schéma d'un réseau de communication constitué d'aéronefs U1, U2, E, 11, 12, 13, 14, D. Dans l'exemple de la figure 1, l'aéronef E est l'émetteur d'un message initial devant être transmis à un réseau satellitaire dont un satellite, non représenté, est en vue de l'aéronef D, la zone VD représentant une section du cône de visibilité d'un satellite du réseau satellitaire. Le principe de base réside dans la propagation du message initial de proche en proche, c'est-à-dire d'un utilisateur à l'autre, jusqu'à atteindre un aéronef en vue d'un satellite du réseau satellitaire, appelé le destinataire D. Ainsi, l'émetteur E envoie le message initial à destination d'un premier utilisateur intermédiaire 11, qui réémet ledit message initial à destination d'un deuxième intermédiaire 12 ...etc. jusqu'à atteindre le destinataire D, apte à faire parvenir le message initial au réseau satellitaire.

Pour chaque aéronef U1, U2, E, I1, I2, I3, I4, D, une zone de visibilité, respectivement VU1, VU2, VE, V11, V12, V13, V14, VD, représente la portée des messages émis par chacun des aéronefs. Sur la figure 1, on constate par exemple que les aéronefs U1 et 11 sont aptes à recevoir un message émis par l'aéronef E. L'aéronef E, émetteur d'un message initial peut ainsi diffuser le message initial à au moins un aéronef voisin, par exemple l'intermédiaire 11, celui-ci diffusant à son tour ledit message initial à un autre intermédiaire, par exemple l'aéronef I2, l'opération se répétant jusqu'à atteindre un aéronef qui soit en mesure de diffuser le message initial au réseau satellitaire. Sur la figure 1, l'aéronef destinataire du message initial est l'aéronef destinataire D, car il se trouve dans la zone de visibilité VD d'un satellite du réseau satellitaire. Ainsi, le réseau de communication selon l'invention, constitué d'un ensemble d'utilisateurs tels que des aéronefs U1, U2, E, I1, I2, I3, I4, D, comme sur la figure 1, et / ou des stations sols et / ou tout objet mobile ou immobile sur terre, à la surface des mers ou dans les airs, forme une sorte de réseau mesh au sein duquel le message initial se propage de proche en proche entre un émetteur E et un destinataire D, ledit destinataire D étant chargé de transmettre le message initial à un réseau satellitaire.

L'invention repose donc, de manière synthétique, sur une optimisation du principe de propagation de données dans un réseau mesh.

Selon l'invention, chaque utilisateur du réseau de communication, à savoir chaque aéronef U1, U2, E, 11, 12, 13, 14, D, émet un message périodique contenant le nombre d'intermédiaires nécessaires pour, en ce qui le concerne, atteindre un utilisateur qui soit en vue d'un satellite du réseau satellitaire. De proche en proche, cette information est diffusée et atteint l'aéronef émetteur E. Ainsi, l'aéronef D, en vue d'un satellite du réseau satellitaire, indique un nombre d'intermédiaires nécessaires pour atteindre un utilisateur qui soit en vue du satellite égal à 0. L'aéronef 14, qui reçoit cette information, indique donc quant à lui un nombre d'intermédiaires nécessaires pour atteindre un utilisateur qui soit en vue du satellite égal à 1.

Au moment d'émettre le message initial, l'aéronef émetteur E connaît le nombre d'intermédiaires nécessaires pour atteindre l'aéronef destinataire D, plus proche aéronef en vue d'un satellite du réseau satellitaire, pour chacun des aéronefs visibles, à savoir les aéronefs I1 et U1 sur la figure 1. L'aéronef E va alors émettre le message initial à destination de l'aéronef visible présentant le nombre d'intermédiaires nécessaires pour atteindre l'aéronef destinataire D le plus bas possible. Si l'aéronef U1 présente un nombre d'intermédiaires nécessaires supérieur à 4, l'aéronef E émet le message initial à destination de l'aéronef intermédiaire I1 qui présente un nombre d'intermédiaires nécessaires égal à 4. L'opération se répète jusqu'à ce que le message initial soit reçu par l'aéronef destinataire D, ce dernier diffusant ledit message initial au réseau satellitaire.

Dans un mode de réalisation préféré, outre le nombre d'intermédiaires nécessaires pour atteindre le destinataire D le plus proche, chaque utilisateur diffuse à ses voisins sa position, voire sa vitesse et son cap.

A partir de la position de chacun des utilisateurs, la méthode selon l'invention consiste à établir et à maintenir dynamiquement une cartographie du réseau et à identifier les chemins les plus courts et / ou les plus sûrs pour diffuser le message initial vers un utilisateur destinataire, en vue d'un satellite du réseau satellitaire. Il est ainsi possible d'estimer la position de chaque destinataire, c'est-à-dire, dans le cas de la figure 1, de chaque aéronef tel que l'aéronef D, en visibilité d'un satellite du réseau satellitaire.

Selon l'invention, il est également prévu de prendre en considération la vitesse et le cap de chaque utilisateur pour estimer au mieux et de façon dynamique la position de chaque destinataire au sein du réseau de communication. Cette estimation peut être basée sur la connaissance des éphémérides des satellites du réseau satellitaire considéré.

En résumé, la méthode selon l'invention comprend donc le maintien à jour de la cartographie du réseau de communication constitué d'un ensemble d'utilisateurs. En particulier, les utilisateurs en vue d'un satellite du réseau satellitaire, c'est-à-dire les destinataires tels que l'aéronef D sur la figure 1, ont leur position connue du réseau de communication, ladite position pouvant être anticipée grâce à la connaissance de leurs vitesse, cap, trajectoire. Comme on l'a vu d'autre part, chaque utilisateur du réseau diffuse le nombre d'intermédiaires nécessaires pour atteindre un utilisateur qui soit en vue d'un satellite du réseau satellitaire, pour ce qui le concerne ; il est donc possible à l'utilisateur émetteur d'un message initial, tel que l'aéronef E sur la figure 1, de déterminer le chemin optimal pour atteindre le destinataire le plus proche, à savoir l'aéronef D sur la figure 1.

Optionnellement, à partir de la connaissance des positions et des déplacements relatifs des utilisateurs, déductibles de leurs vitesses et caps, et des satellites, grâce aux éphémérides, chaque utilisateur peut diffuser dans le message périodique transmis à ses voisins visibles, en plus du nombre d'intermédiaires nécessaires pour atteindre un utilisateur qui soit en vue d'un satellite du réseau satellitaire et de ses position, vitesse et cap, une information de durée de validité correspondant à la durée pendant laquelle le nombre d'intermédiaires nécessaires pour atteindre un utilisateur qui soit en vue d'un satellite, transmis dans le message périodique, est valable.

Par ailleurs, le message périodique peut également comprendre une liste de futurs nombres d'intermédiaires nécessaires associés à des durées de validité, qui seront successivement valables pour chaque utilisateur concerné. Par exemple, un message périodique transmis par un utilisateur peut comprendre les informations suivantes :
- actuellement : intermédiaire de distance 1 - signifiant : « présentant un nombre d'intermédiaires nécessaires égal à 1 » ;
- dans 10 secondes : destinataire ;
- dans 30 secondes : intermédiaire de distance 1 ;
- dans 45 secondes : intermédiaire de distance 3 ...etc.

La méthode selon l'invention peut en outre comprendre un aspect de redondance. En effet, l'utilisateur émetteur peut envoyer le message initial sur deux chemins distincts, menant vers le même satellite du réseau satellitaire ou vers deux satellites différents.

D'autre part, il faut noter que la présente invention concerne en priorité les communications provenant d'aéronefs à destination d'un réseau satellitaire, comme dans l'exemple de la figure 1. Cependant, le réseau de communication visé peut aussi bien, comme alternative ou en supplément, comprendre des stations sol, tout type d'éléments fixes ou mobiles sur terre ou en mer. Par exemple, la méthode selon l'invention est adaptée aux communications portuaires à destination d'un réseau satellitaire.

La méthode selon l'invention permet de s'affranchir de constellations comprenant plusieurs dizaines de satellites. Typiquement, le système peut être mis en oeuvre avec un réseau satellitaire constitué de 4 à 10 satellites. Dans un mode de réalisation préféré, le réseau satellitaire comprend 6 satellites.

En complément, la méthode selon l'invention peut néanmoins, en cas de force majeure, prévoir l'utilisation de constellations de satellites globales lorsque l'utilisateur émetteur n'a connaissance d'aucun utilisateur destinataire accessible.

## Revendications

1. Méthode de propagation de messages dans un réseau de communication à destination d'un réseau satellitaire, le réseau de communication étant constitué d'un ensemble d'utilisateurs et le réseau satellitaire comprenant au moins un satellite, l'ensemble d'utilisateurs (U1,U2,I1,I2,I3,I4,E,D) comprenant un émetteur (E) et un destinataire (D), ledit destinataire (D) étant destiné à émettre vers le réseau satellitaire un message initial provenant de l'émetteur (E), au moins un satellite du réseau satellitaire étant visible dudit destinataire (D), c'est-à-dire apte à recevoir un message émis par ledit destinataire (D), chaque utilisateur (U1,U2,I1,I2,I3,I4,E,D) étant apte à émettre un message avec une portée telle qu'un sous-ensemble d'utilisateurs visibles est apte à recevoir ledit message, et ledit message pouvant être transmis d'utilisateur en utilisateur, de sorte que, l'émetteur (E) émettant le message initial, ledit message initial peut être transmis au destinataire (D) en passant par un certain nombre d'utilisateurs intermédiaires (11,12,13,14),
**caractérisée en ce que** chaque utilisateur (U1,U2,I1,I2,I3,I4,E,D) détermine un nombre d'intermédiaires nécessaires pour atteindre le destinataire (D) et émet périodiquement un message comprenant ledit nombre d'intermédiaires nécessaires pour atteindre le destinataire, et **en ce que** ledit message initial est émis par l'émetteur (E) à destination de l'utilisateur visible présentant le nombre d'intermédiaires nécessaires le plus bas possible, appelé intermédiaire optimal (11), ledit intermédiaire optimal (11) devenant à son tour émetteur et émettant le message initial, l'opération se répétant jusqu'à atteindre le destinataire.

2. Méthode selon la revendication 1, **caractérisée en ce que** les utilisateurs (U1,U2,I1,I2,I3,I4,E,D) sont des aéronefs et / ou des stations sol.

3. Méthode selon l'une quelconque des revendications précédentes, dans laquelle une partie au moins des utilisateurs présente une position fixe connue de l'émetteur.

4. Méthode selon l'une quelconque des revendications précédentes, **caractérisée en ce que** le message émis périodiquement par l'ensemble des utilisateurs comprend la position de l'utilisateur concerné.

5. Méthode selon la revendication 4, **caractérisée en ce que** le message émis périodiquement par l'ensemble des utilisateurs comprend en outre la vitesse de l'utilisateur concerné.

6. Méthode selon l'une quelconque des revendications 4 à 5, **caractérisée en ce que** le message émis périodiquement par l'ensemble des utilisateurs comprend en outre le cap de l'utilisateur concerné.

7. Méthode selon l'une quelconque des revendications 1 à 6, **caractérisée en ce que** le message émis périodiquement par l'ensemble des utilisateurs comprend en outre une information de durée de validité pendant laquelle le nombre d'intermédiaires nécessaires pour atteindre le destinataire (D) contenu ledit message pour l'utilisateur concerné est valable.

8. Méthode selon la revendication 7, **caractérisée en ce que** le message émis périodiquement par l'ensemble des utilisateurs comprend en outre un nombre futur d'intermédiaires nécessaires pour atteindre le destinataire (D) après que ladite durée de validité s'est écoulée, ledit nombre futur d'intermédiaires nécessaires pour atteindre le destinataire présentant sa propre durée de validité.

9. Méthode selon la revendication 7, **caractérisée en ce que** le message émis périodiquement par l'ensemble des utilisateurs comprend en outre une succession de nombres futurs d'intermédiaires nécessaires pour atteindre le destinataire (D) après que ladite durée de validité s'est écoulée, chaque nombre futur d'intermédiaires nécessaires pour atteindre le destinataire présentant sa propre durée de validité.

10. Méthode selon l'une quelconque des revendications 4 à 6, **caractérisée en ce que** l'émetteur (E) détermine en temps réel la position estimée des utilisateurs (U1,U2,I1,I2,I3,I4,E,D) du réseau de communication et détermine de manière dynamique le chemin le plus court permettant de faire parvenir le message initial au destinataire (D) en passant par le nombre d'intermédiaires le plus bas possible.

## Patentansprüche

1. Verfahren zum Verbreiten von Nachrichten in einem Kommunikationsnetz zu einem Satellitennetz, wobei das Kommunikationsnetz von einer Gruppe von Benutzern gebildet wird und das Satellitennetz wenigstens einen Satelliten umfasst, wobei die Gruppe von Benutzern (U1, U2, I1, I2, I3, I4, E, D) einen Emitter (E) und einen Adressaten (D) umfasst, wobei der Adressat (D) die Aufgabe hat, eine vom Emitter (E) kommende Ursprungsnachricht zum Satellitennetz zu übertragen, wobei wenigstens ein Satellit des Satellitennetzes für den Adressaten (D) sichtbar ist, d.h. eine vom Adressat (D) emittierte Nachricht empfangen kann, wobei jeder Benutzer (U1, U2, I1, I2, I3, I4, E, D) eine Nachricht über eine solche Entfernung emittieren kann, dass eine Untergruppe von sichtbaren Benutzern die Nachricht empfangen kann, und wobei die Nachricht von Benutzer zu Benutzer gesendet werden kann, so dass der die Ursprungsnachricht emittierende Emitter (E) die Ursprungsnachricht zum Adressaten (D) über eine bestimmte Anzahl von Zwischenbenutzern (I1, I2, I3, I4) senden kann,
**dadurch gekennzeichnet, dass** jeder Benutzer (U1, U2, I1, I2, I3, I4, E, D) eine zum Erreichen des Adressaten (D) nötige Anzahl von Intermediaten bestimmt und periodisch eine Nachricht emittiert, die die Anzahl der zum Erreichen des Adressaten nötigen Intermediate umfasst, und dadurch, dass die Ursprungsnachricht vom Emitter (E) zum sichtbaren Benutzer mit der geringstmöglichen Anzahl von nötigen Intermediaten emittiert wird, optimaler Intermediat (I1) genannt, wobei der optimale Intermediat (I1) wiederum zum Emitter wird und die Ursprungsnachricht emittiert, wobei dieser Vorgang wiederholt wird, bis der Adressat erreicht ist.

2. Verfahren nach Anspruch 1, **dadurch gekennzeichnet, dass** die Benutzer (U1, U2, I1, I2, I3, I4, E, D) Luftfahrzeuge und/oder Bodenstationen sind.

3. Verfahren nach einem der vorherigen Ansprüche, wobei wenigstens ein Teil der Benutzer eine dem Emitter bekannte feste Position hat.

4. Verfahren nach einem der vorherigen Ansprüche, **dadurch gekennzeichnet, dass** die periodisch von der Gruppe von Benutzern emittierte Nachricht die Position des betreffenden Benutzers umfasst.

5. Verfahren nach Anspruch 4, **dadurch gekennzeichnet, dass** die periodisch von der Gruppe von Nutzern emittierte Nachricht darüber hinaus die Geschwindigkeit des betroffenen Benutzers umfasst.

6. Verfahren nach einem der Ansprüche 4 bis 5, **dadurch gekennzeichnet, dass** die periodisch von der Gruppe von Benutzern emittierte Nachricht darüber hinaus den Kurs des betroffenen Benutzers umfasst.

7. Verfahren nach einem der Ansprüche 1 bis 6, **dadurch gekennzeichnet, dass** die periodisch von der Gruppe von Benutzern emittierte Nachricht darüber hinaus Informationen über die Dauer der Gültigkeit umfasst, während der die Anzahl der die zum Erreichen des in der Nachricht enthaltenen Adressaten (D) nötigen Intermediate für den betroffenen Benutzer gültig ist.

8. Verfahren nach Anspruch 7, **dadurch gekennzeichnet, dass** die periodisch von der Gruppe von Benutzern emittierte Nachricht darüber hinaus eine zukünftige Anzahl von zum Erreichen des Adressaten (D) nötigen Intermediaten umfasst, wonach die Gültigkeitsdauer abläuft, wobei die zukünftige Anzahl von zum Erreichen des Adressaten nötigen Intermediaten ihre eigene Gültigkeitsdauer hat.

9. Verfahren nach Anspruch 7, **dadurch gekennzeichnet, dass** die periodisch von der Gruppe von Benutzern emittierte Nachricht darüber hinaus eine Folge von zukünftigen Anzahlen von zum Erreichen des Adressaten (D) nötigen Intermediaten umfasst, wonach die Gültigkeitsdauer abläuft, wobei jede zukünftige Anzahl von zum Erreichen des Adressaten nötigen Intermediaten ihre eigene Gültigkeitsdauer hat.

10. Verfahren nach einem der Ansprüche 4 bis 6, **dadurch gekennzeichnet, dass** der Emitter (E) in Echtzeit die geschätzte Position der Benutzer (U1, U2, I1, I2, I3, I4, E, D) des Kommunikationsnetzes ermittelt und auf dynamische Weise den kürzesten Weg ermittelt, über den die Ursprungsnachricht zum Adressaten (D) über die geringstmögliche Anzahl von Intermediaten zulässt.

## Claims

1. A method for propagating messages in a communication network to a satellite array, said communication network being formed by a set of users and said satellite array comprising at least one satellite, said set of users (U1, U2, I1, I2, I3, I4, E, D) comprising a transmitter (E) and a receiver (D), said receiver (D) being designed to transmit an initial message originating from said transmitter (E) to said satellite array, with at least one satellite of said satellite array being visible to said receiver (D), i.e. capable of receiving a message transmitted by said receiver (D), each user (U1, U2, I1, I2, I3, I4, E, D) being capable of transmitting a message with a range such that a sub-set of visible users is capable of receiving said message, and said message being able to be transmitted from user to user so that, with said transmitter (E) transmitting the initial message, said initial message can be transmitted to said receiver (D) by passing through a certain number of intermediate users (Il, I2, I3, I4),
**characterised in that** each user (U1, U2, I1, I2, I3, I4, E, D) determines a number of intermediaries needed to reach said receiver and periodically transmits a message comprising said number of intermediaries needed to reach said receiver, and **in that** said initial message is transmitted by said transmitter (E) to the visible user having the lowest possible number of intermediaries needed, referred to as optimal intermediary (I1), said optimal intermediary (I1) in turn becoming the transmitter and transmitting the initial message, with the operation being repeated until the receiver is reached.

2. The method according to claim 1, **characterised in that** said users (U1, U2, I1, I2, I3, I4, E, D) are aircraft and/or ground stations.

3. The method according to any one of the preceding claims, wherein at least part of the users has a fixed position that is known by said transmitter.

4. The method according to any one of the preceding claims, **characterised in that** the message that is periodically transmitted by said set of users comprises the position of the relevant user.

5. The method according to claim 4, **characterised in that** the message that is periodically transmitted by said set of users further comprises the speed of the relevant user.

6. The method according to any one of claims 4 to 5, **characterised in that** the message that is periodically transmitted by said set of users further comprises the heading of the relevant user.

7. The method according to any one of claims 1 to 6, **characterised in that** the message that is periodically transmitted by said set of users further comprises information relating to a duration of validity, during which the number of intermediaries needed to reach said receiver (D) that is contained in said message for the relevant user is valid.

8. The method according to claim 7, **characterised in that** the message that is periodically transmitted by said set of users further comprises a future number of intermediaries needed to reach said receiver (D) after said duration of validity has elapsed, said future number of intermediaries needed to reach said receiver having its own duration of validity.

9. The method according to claim 7, **characterised in that** the message that is periodically transmitted by said set of users further comprises a succession of future numbers of intermediaries needed to reach said receiver (D) after said duration of validity has elapsed, with each future number of intermediaries needed to reach said receiver having its own duration of validity.

10. The method according to any one of claims 4 to 6, **characterised in that** said transmitter (E) determines, in real time, the estimated position of said users (U1, U2, I1, I2, I3, I4, E, D) of said communication network and dynamically determines the shortest path that allows the initial message to reach said receiver (D) by passing through the lowest possible number of intermediaries.
